# DEMANDE DE BREVET EUROPEEN

(11) **EP 4 123 766 A1**
(43) Date de publication de la demande: **25.01.2023**
(21) Numéro de dépôt: 22186273.3
(22) Date de dépôt: 21.07.2022
(51) Int. Cl.: H01M 8/04014, H01M 8/04029, H01M 8/04089, H01M 8/04119, H01M 8/0668, H01M 8/12

(54) **PROCÉDÉ DE MISE EN UVRE D'UN SYSTÈME DE PILE À COMBUSTIBLE AVEC RÉCUPÉRATION DE DIOXYDE DE CARBONE ET INSTALLATION ASSOCIÉE**

(30) Priorité: 23.07.2021 FR 2108009
(71) Demandeur: Technip Energies France, 92741 Nanterre Cedex (FR)
(72) Inventeur: DE-SORBIER, Thibault, 92741 Nanterre Cedex (FR); SELLINI, Marc, 92741 Nanterre Cedex (FR); LEYMARIOS, Gaël, 92741 Nanterre Cedex (FR)
(74) Mandataire: Lavoix

(57) **Abrégé**

Procédé de mise en œuvre d'un système de pile à combustible, comprenant les étapes suivantes :
- la mise en fonctionnement d'une unité de pile à combustible (30) ;
- la récupération en sortie (74, 76) de l'unité de pile à combustible (30) d'un flux gazeux anodique (36) riche en dioxyde de carbone;
- le refroidissement du flux gazeux anodique (36) et la condensation de l'eau présente dans flux gazeux anodique (36) pour former un flux anodique sec (40) ;
- l'introduction du flux anodique sec (40) dans une unité de captage de dioxyde de carbone (34) pour former un courant gazeux de dioxyde de carbone (18) et un flux anodique appauvri en dioxyde de carbone (19) ;
- le recyclage d'au moins une partie (124) du flux anodique appauvri en dioxyde de carbone (19) dans le flux combustible d'alimentation (35).

## Description

La présente invention concerne un procédé de mise en œuvre d'un système de pile à combustible comprenant une étape de récupération du dioxyde de carbone.

Le procédé de l'invention est typiquement mis en œuvre dans une installation de pile à combustible permettant la production d'un courant électrique par réaction électrochimique entre un fluide combustible, et le dioxygène de l'air. Le fluide combustible est typiquement un gaz tel que le dihydrogène, le monoxyde de carbone, le méthane, le propane, le butane, les gaz de fermentation, la biomasse gazéifiée, et/ou les vapeurs de peinture. Le fluide combustible peut également consister en un fluide combustible tel que du méthanol, de l'éthanol ou encore du carburant, notamment de type diesel ou essence.

La pile à combustible est typiquement constituée d'une ou de plusieurs piles à combustibles à oxydes solides (ou « SOFC » selon l'acronyme anglais de « *Solid Oxide Fuel Cells »).*

Ces piles sont prévues essentiellement pour les applications stationnaires avec une puissance de sortie allant de 1 kW à 2 MW.

Un élément de SOFC est généralement constitué de quatre couches, trois d'entre elles étant des céramiques. Une pile unique constituée de ces quatre couches superposées possède une épaisseur typique de quelques millimètres. Des dizaines de ces piles sont alors superposées en série pour former un empilement (ou « stack »).

Dans ces piles, des ions oxygène formés du côté cathode sont déplacés au travers d'un oxyde solide pris comme électrolyte à haute température afin de réagir avec le gaz combustible, par exemple l'hydrogène, du côté anode.

Cette réaction électrochimique conduit à la production d'électricité ainsi qu'à la formation de dioxyde de carbone et d'eau, issus de la réaction électrochimique.

Le dioxyde de carbone CO₂ est cependant l'un des principaux gaz à effet de serre, dont les rejets dans l'atmosphère sont responsables du réchauffement climatique. Afin de réduire l'impact environnemental des piles à combustible, il est donc nécessaire de réduire au maximum les rejets de dioxyde de carbone dans l'atmosphère.

Par ailleurs, bien que la réaction électrochimique entre les ions oxygène et le combustible soit complète, la quantité d'ions oxygène générés dans l'élément de SOFC est insuffisante pour consommer l'intégralité du fluide combustible (réformé). Une quantité importante de fluide combustible non-consommé est ainsi nécessairement récupérée en sortie de l'élément de SOFC. Le taux de conversion du fluide combustible dans un élément de SOFC est classiquement de l'ordre de 60%.

Dans les installations connues, une partie du gaz sortant de l'anode, comprenant le dioxyde de carbone formé, est recyclée vers l'anode de la pile afin de consommer la partie du combustible n'ayant pas réagi, augmentant ainsi le rendement de la pile. La partie restante du flux sortant de l'anode est quant à elle envoyée au sein d'un brûleur catalytique au sein duquel elle est brûlée avec le flux d'air appauvri en oxygène récupéré en sortie de la cathode de l'élément de SOFC.

Afin de récupérer le dioxyde de carbone présent dans des effluents industriels, il est connu de les injecter dans une unité de captage de dioxyde de carbone. Le captage du dioxyde de carbone est typiquement réalisé au moyen d'un solvant liquide, notamment d'une solution aqueuse aminée, capable d'absorber le dioxyde de carbone. Le solvant liquide absorbe le dioxyde de carbone présent dans les effluents gazeux. Un simple chauffage du solvant liquide chargé en dioxyde de carbone permet ensuite de récupérer le dioxyde de carbone et de régénérer le solvant liquide qui peut ainsi être à nouveau utilisé pour le traitement de nouveaux effluents.

Dans une telle configuration, proche d'un système traditionnel de capture sur fumée, l'unité de captage de dioxyde de carbone est placée à la suite du brûleur catalytique de manière à traiter le flux sortant du brûleur. Elle constitue ainsi un module de post-traitement des effluents, avant leur évacuation de l'installation. L'unité de captage de dioxyde de carbone n'est pas intégrée dans l'installation de pile à combustible. En particulier, le flux sortant de l'unité de captage de dioxyde de carbone n'est ici pas réinjecté dans l'installation.

De plus, la concentration en dioxyde de carbone dans le gaz sortant du brûleur catalytique est très faible, typiquement inférieure ou égale à 8% en mole. En effet, la partie du flux anodique introduite dans le brûleur catalytique est mélangée avec de l'air appauvri en oxygène sortant de la cathode. Cette étape de mélange a alors pour effet de réduire significativement la teneur en dioxyde de carbone dans les effluents à traiter. La récupération de dioxyde de carbone présent en une si faible concentration nécessite l'emploi d'un solvant liquide présentant un taux de régénération très élevé, typiquement l'emploi d'un solvant liquide parfaitement régénéré, ce qui représente une consommation énergétique très importante. Par ailleurs, l'oxygène de l'air présent après le brûleur peut entrainer des problèmes de dégradation du solvant liquide, notamment du composé aminé.

De telles installations nécessitent par ailleurs des équipements coûteux et encombrants comme une colonne de stripage, ainsi que des systèmes de rebouillage et de condensation. Plus précisément, un système de rebouillage permet de chauffer le solvant liquide chargé en dioxyde de carbone à des températures typiquement proches de 130°C afin de permettre la vaporisation d'un flux important de vapeur d'eau. Cette vapeur d'eau, en remontant à contre-courant dans la colonne de stripage, permet ensuite de régénérer le solvant liquide. En tête de colonne de stripage, la totalité du dioxyde de carbone provenant du solvant liquide chargé est récupéré avec une partie importante de vapeur d'eau. Le dioxyde de carbone est récupéré via une étape de condensation permettant d'en extraire l'eau sous forme liquide. Cette eau liquide est ensuite réinjectée en tête de colonne de stripage, elle descendra tout le long de la colonne jusqu'au système de rebouillage afin d'être de nouveau partiellement vaporisée. Ce système de vaporisation/condensation implique donc une consommation énergétique du système de rebouillage importante.

Un but de l'invention est donc de fournir un procédé de mise en œuvre d'un système de pile à combustible permettant de récupérer de manière efficace et fiable le dioxyde de carbone présent dans les effluents anodiques, tout en limitant les coûts d'investissement et d'exploitation du procédé.

En particulier, le but de l'invention est de fournir un procédé intégré qui permet de minimiser le besoin énergétique pour la récupération du dioxyde de carbone de manière significative.

Plus particulièrement, le but de l'invention est de fournir un procédé de mise en oeuvre d'un système de pile à combustible intégrant une unité de capture de dioxyde de carbone dont la mise en oeuvre ne nécessitant pas l'apport d'énergie extérieure, l'énergie thermique nécessaire à son fonctionnement étant récupérée par intégration thermique.

À cet effet, l'invention a pour objet un procédé de mise en oeuvre d'un système de pile à combustible, comprenant les étapes suivantes :
- la mise en fonctionnement d'une unité de pile à combustible comprenant au moins un système d'anodes et au moins un système de cathodes, ladite unité de pile à combustible étant alimentée en continu avec un flux combustible d'alimentation injecté au niveau du système d'anodes et avec un flux gazeux riche en dioxygène injecté au niveau du système de cathodes ;
- la récupération en sortie de l'unité de pile à combustible d'un flux gazeux anodique riche en dioxyde de carbone et d'un flux gazeux cathodique comprenant de l'eau ;
- le refroidissement du flux gazeux anodique et la condensation de l'eau présente dans flux gazeux anodique dans une unité de post-traitement, de refroidissement et de condensation pour former un flux anodique sec ;
- l'introduction du flux anodique sec dans une unité de captage de dioxyde de carbone pour former un courant gazeux de dioxyde de carbone et un flux anodique appauvri en dioxyde de carbone ;
- l'injection d'au moins une partie du flux anodique appauvri en dioxyde de carbone dans le flux combustible d'alimentation de manière à recycler ladite au moins une partie dans l'unité de pile à combustible.

Le procédé selon l'invention peut comprendre l'une ou plusieurs des caractéristiques suivantes, prise(s) isolément ou suivant toute combinaison techniquement possible :
- le flux anodique appauvri en dioxyde de carbone présente une teneur en dioxyde de carbone de 10% à 80% en volume, de préférence de 20% à 70% en volume, encore plus préférentiellement de 40% à 60% en volume ;
- au niveau de l'unité de captage du dioxyde de carbone, le flux anodique sec est mis en contact avec un solvant liquide apte à absorber du dioxyde de carbone pour former le flux anodique appauvri en dioxyde de carbone et un flux de pied liquide comprenant le solvant liquide chargé en dioxyde de carbone ;
- le dioxyde de carbone absorbé dans le flux de pied liquide est ensuite partiellement relargué par chauffage du flux de pied liquide pour former le courant de dioxyde de carbone et un courant de solvant liquide partiellement régénérée ;
- le flux de pied liquide est chauffé par échange thermique avec le flux gazeux anodique et/ou le flux gazeux cathodique, de préférence est uniquement chauffée par échange thermique avec le flux gazeux anodique et/ou le flux gazeux cathodique ;
- au moins 80% du dioxyde de carbone produit au cours du fonctionnement du procédé est récupéré dans le courant gazeux de dioxyde de carbone, de préférence au moins 90% en moles, plus préférentiellement de 90% à 99% en moles.
- le flux combustible d'alimentation est un flux d'hydrocarbures en C1-C5, de préférence est un flux de méthane ;
- une partie du flux anodique appauvri en dioxyde de carbone est prélevée en sortie de l'unité de captage de dioxyde de carbone puis brûlée dans un four, de préférence moins de 30% en masse du flux anodique appauvri en dioxyde de carbone est introduit dans le four (120), plus préférentiellement de 5 à 20% en masse ;
- le flux de pied liquide est au moins partiellement chauffé par échange thermique avec un fluide caloporteur circulant dans un circuit fermé d'échange thermique, ledit fluide caloporteur étant chauffé par échange thermique avec le flux gazeux anodique et/ou le flux gazeux cathodique ;
- avant d'être injecté dans l'unité de pile à combustible, le flux combustible d'alimentation est chauffé par échange thermique avec le flux gazeux anodique.

L'invention a également pour objet une installation de pile à combustible comprenant:
- une unité de pile à combustible comportant une entrée d'introduction d'un flux combustible d'alimentation, une entrée d'introduction d'un flux gazeux riche en dioxygène, une sortie de récupération d'un flux gazeux anodique, et une sortie de récupération d'un flux gazeux cathodique,
- une unité de post-traitement, de refroidissement et de condensation destinée à refroidir et sécher le flux gazeux anodique pour former un flux anodique sec,
- une unité de captage de dioxyde de carbone destinée à former un courant gazeux de dioxyde de carbone et un flux anodique appauvri en dioxyde de carbone comprenant une entrée d'introduction du flux anodique sec et une sortie de récupération du flux anodique appauvri en dioxyde de carbone,
dans laquelle la sortie de récupération du flux anodique appauvri en dioxyde de carbone est reliée à l'entrée d'introduction du flux combustible d'alimentation dans l'unité de pile combustible.

L'installation selon l'invention peut comprendre l'une ou plusieurs des caractéristiques suivantes, prises isolément ou suivant toute combinaison techniquement possible :
- l'unité de captage du dioxyde de carbone comprend :
   - un absorbeur destiné à mettre en contact le flux anodique sec avec un solvant liquide apte à absorber du dioxyde de carbone pour former en tête de l'absorbeur le flux anodique appauvri en dioxyde de carbone et en pied de l'absorbeur un flux de pied liquide comprenant le solvant liquide chargé en dioxyde de carbone,
   - au moins un système d'échangeur thermique destiné à chauffer le flux de pied liquide pour former un flux de pied chauffé,
   - un ballon relié audit au moins un système d'échangeur thermique destiné à former en tête du ballon le courant de dioxyde de carbone et, en pied du ballon un courant de solvant liquide partiellement régénérée destiné à être injectée dans l'absorbeur ;
- l'installation comprend en outre un circuit fermé d'échange thermique comprenant un fluide caloporteur destiné à être placé en échange thermique d'une part avec flux de pied liquide comprenant le solvant liquide chargé en dioxyde de carbone, au niveau dudit au moins un système d'échangeur thermique, et d'autre part avec le flux gazeux anodique et/ou le flux gazeux cathodique ;
- l'unité de captage de dioxyde de carbone est dépourvue de colonne de stripage.

L'invention sera mieux décrite à la lecture de la description qui va suivre, donnée uniquement à titre d'exemple, et faite à se référant aux desseins annexés, sur lesquels :
La figure 1 est un schéma synoptique représentant une installation destinée à la mise en œuvre d'un procédé selon l'invention ;
La figure 2 est un schéma synoptique décrivant l'unité de captage de dioxyde de carbone de l'installation de la figure 1.

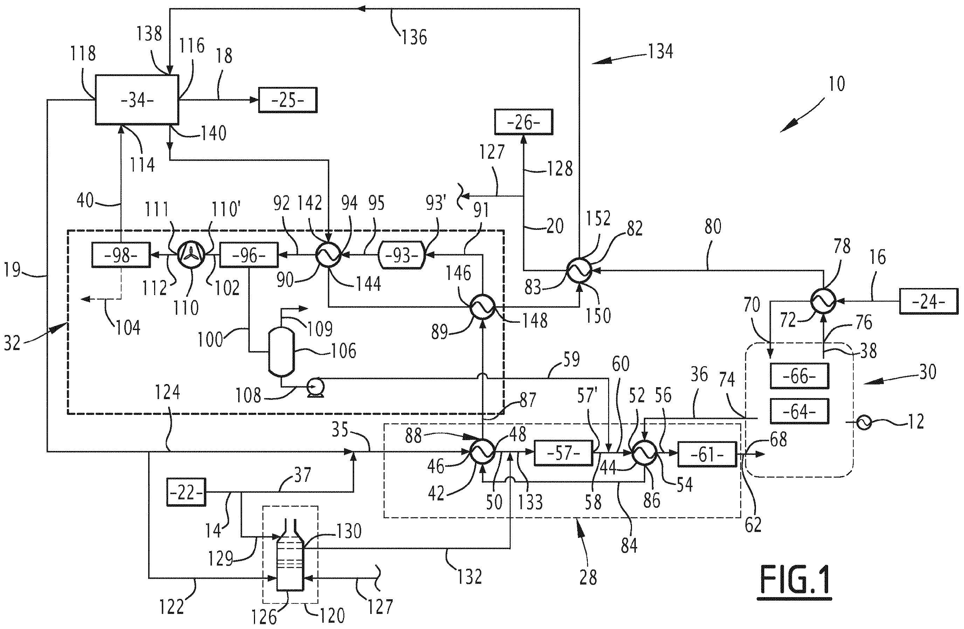

Une installation 10 selon l'invention est illustrée schématiquement sur la figure 1.

L'installation 10 est destinée à la production d'un courant électrique 12 à partir d'un flux gazeux combustible 14 et d'un flux gazeux riche en dioxygène 16.

L'installation 10 est également destinée à la récupération, comme effluents, d'un courant de dioxyde de carbone 18 et d'autre part d'un flux gazeux appauvri en dioxygène 20.

L'installation est raccordée en amont à une première unité de stockage 22 destinée à stocker le gaz combustible 14, ainsi qu'à une seconde unité de stockage 24 destinée à stocker le gaz riche en dioxygène 16.

De manière alternative, l'unité de stockage 22 peut être remplacée par un réseau de distribution de gaz permettant d'acheminer le gaz combustible dans l'installation 10 de l'invention.

Lorsque le gaz riche en dioxygène 16 est de l'air, l'unité de stockage 24 peut être remplacée par un système de pompe et compresseur permettant d'acheminer de l'air atmosphérique, éventuellement compressé, dans l'installation 10 de l'invention.

Le flux gazeux combustible 14 comprend typiquement du dihydrogène ; du monoxyde de carbone ; du gaz naturel contenant principalement du méthane ainsi que des quantités inférieures d'éthane, de propane, de butane et d'hydrocarbures plus lourds ; des gaz de fermentation ; de la biomasse gazéifiée ; des vapeurs de peinture ou encore l'un quelconque de leurs mélanges. De préférence, le flux gazeux combustible 14 est un flux de méthane.

De préférence, le flux gazeux combustible 14 est à une pression allant de 1 atm à 5 bara (bars absolus), plus préférentiellement de 1 atm à 1,5 bara (bars absolus).

Le flux gazeux riche en dioxygène 16 présente typiquement une teneur en dioxygène d'au moins 10% en volume, de préférence de 15% à 25% en volume de dioxygène. Avantageusement, le flux gazeux riche en dioxygène 16 est un flux d'air.

De préférence, le flux gazeux riche en dioxygène 16 est à une pression allant de 1 atm à 5 bara (bars absolus).

L'installation 10 est raccordée en aval à une installation 25 de transport et/ou de séquestration de dioxyde de carbone et à une installation 26 destinée à collecter le flux gazeux appauvri en dioxygène 20 en vue de son post-traitement ou à rejeter le flux gazeux appauvri en dioxygène 20 directement dans l'atmosphère.

De préférence, le flux gazeux appauvri en dioxygène 20 est directement rejeté dans l'atmosphère au niveau de l'installation 26.

Alternativement, le flux gazeux appauvri en dioxygène 20 est collecté dans l'installation 26 afin d'être acheminé vers une autre installation où il sera consommé ou transformé.

L'installation 10 comporte typiquement une unité de prétraitement 28, une unité de pile à combustible 30, une unité de post-traitement, de refroidissement et de condensation 32, et une unité de captage de dioxyde de carbone 34.

L'unité de stockage 22 (ou le réseau de distribution de gaz) est connectée à l'entrée de l'unité de prétraitement de 28 de sorte qu'une première partie 37 du flux gazeux combustible 14 soit injectée dans l'unité de prétraitement 28.

Avant son introduction dans l'unité de prétraitement 28, la première partie 37 du flux gazeux combustible 14 est mélangée avec une flux 124 de recyclage récupéré en sortie de l'unité de captage de dioxyde de carbone 34 pour former un flux combustible d'alimentation 35. La nature du flux 124 de recyclage est décrit de manière détaillée ci-après.

L'unité de prétraitement 28 est destinée à chauffer et prétraiter le flux combustible d'alimentation 35, avant son introduction dans l'unité de pile à combustible 30.

L'unité de pile à combustible 30 est destinée à produire le courant électrique 12 à partir du flux combustible d'alimentation 35 et du flux gazeux riche en dioxygène 16 pour former en sortie d'une part un flux gazeux anodique 36 et d'autre part un flux gazeux cathodique 38.

L'unité de post-traitement, de refroidissement et de condensation 32 est destinée à refroidir le flux gazeux anodique 36 et à en extraire l'excédent d'eau par condensation pour former un flux anodique sec 40. De préférence, l'unité 32 permet également de convertir au moins une partie du monoxyde de carbone présent dans le flux gazeux anodique 36 en dihydrogène et dioxyde de carbone, typiquement par réaction avec de la vapeur d'eau. Cette conversion permet alors de de limiter l'oxydation du solvant liquide utilisé dans l'unité de captage de dioxyde de carbone 34 par les molécules oxydantes de monoxyde de carbone et d'augmenter la concentration en dioxyde de carbone dans le flux gazeux anodique 36 afin d'en faciliter la capture dans l'unité 34.

Enfin, l'unité de captage de dioxyde de carbone 34 est destinée à récupérer au moins une partie du dioxyde de carbone présent dans le flux anodique sec 40 sous la forme du courant de dioxyde de carbone 18 et à récupérer un flux anodique appauvri en dioxyde de carbone 19.

Dans une configuration préférée, l'unité de prétraitement 28 comporte typiquement un premier système d'échangeur thermique 42 et un second système d'échangeur thermique 44 destinés à chauffer le flux combustible d'alimentation 35, avant son introduction dans l'unité de pile à combustible 30.

Au sens de l'invention, un système d'échangeur thermique comprend au moins un échangeur thermique. Un système d'échangeur thermique peut ainsi comprendre un unique échangeur thermique ou plusieurs échangeurs thermiques associés entre-eux.

Le premier système d'échangeur thermique 42 comprend ainsi une entrée 46 d'introduction du flux combustible d'alimentation 35 et une sortie 48 de récupération d'un flux combustible préchauffé 50. Le second système d'échangeur thermique 44 comprend une entrée 52 d'introduction du flux combustible préchauffé 50 et une sortie 54 de récupération d'un flux combustible chauffé 56.

De préférence, l'unité de prétraitement 28 comprend également, entre le premier système d'échangeur thermique 42 et le second système d'échangeur thermique 44, une unité de désulfurisation 57. L'unité de désulfurisation 57 est reliée d'une part à la sortie 48 du premier système d'échangeur thermique 42 et d'autre part à l'entrée 52 du second système d'échangeur thermique 44. L'unité de désulfurisation 57 est destinée à absorber le soufre éventuellement présent dans le flux combustible d'alimentation 35, afin de prévenir un empoisonnement de l'unité de pile à combustible 30 en aval. Les unités de désulfurisation sont connues de l'homme du métier et ne seront donc pas davantage détaillés ici. L'unité de désulfurisation 57 comprend alors une sortie 57' de récupération d'un flux combustible désulfurisé 58.

De préférence, la sortie 57' de l'unité de désulfurisation 57 est reliée à un flux d'eau 59 de sorte que le flux combustible désulfurisé 58 soit mélangé avec le flux d'eau 59 pour former un flux mixte 60

Ainsi, et lorsque l'unité de prétraitement 28 comprend une unité de désulfurisation 57, le second système d'échangeur thermique 44 est alimenté avec le flux mixte 60 et non avec le flux combustible préchauffé 50 comme indiqué ci-dessus. En particulier, dans ce cas l'entrée 52 est une entrée d'introduction du flux mixte 60 dans le second système d'échangeur thermique 44.

L'unité de prétraitement 28 peut également comprendre, de préférence en aval du second système d'échangeur thermique 44, un module de pré-réformage 61. Le module de pré-réformage 61 est typiquement relié d'une part à la sortie 54 du second système d'échangeur 44 et d'autre part à l'unité de pile à combustible 30. Le module de pré-réformage 61 est destiné à former, à partir du flux combustible chauffé 56, un flux 62 constitué de dihydrogène, de monoxyde de carbone, d'eau et d'une partie du combustible de départ n'ayant pas réagi. Le module de pré-réformage 61 permet en particulier de convertir les hydrocarbures plus lourds que le méthane tels que l'éthane, le propane, le butane et le pentane présents dans le flux combustible d'alimentation 35 afin de prévenir un dépôt de carbone (ou cokage) au sein de l'unité de pile à combustible 30. Les modules de pré-réformage sont connus de l'homme du métier et ne seront donc pas davantage détaillés ici.

L'unité de prétraitement 28 peut également comprendre des modules supplémentaires destinés à éliminer d'autres polluants ou impuretés qui seraient présents dans le flux combustible d'alimentation 35, comme par exemple du mercure. De tels modules sont connus de l'homme de métier qui saura comment les intégrer dans l'installation de l'invention sans en modifier le fonctionnement décrit ici.

L'unité de pile à combustible 30 comprend typiquement au moins un système d'anodes 64 et au moins un système de cathodes 66, séparées les unes des autres par au moins un électrolyte (non représenté), notamment un électrolyte solide.

Au sens de l'invention, un système d'anodes (respectivement de cathodes) comprend au moins une anode (respectivement au moins un cathode). Un système d'anodes (respectivement de cathodes) peut ainsi comprendre une unique anode (respectivement cathode) ou plusieurs anodes (respectivement cathodes) associées entre-elles.

L'unité de pile à combustible 30 comporte une entrée 68 d'introduction du flux combustible chauffé 56 (ou du flux 62 issu du module de pré-réformage 60, lorsque le module de pré-réformage 61 est présent). L'entrée 68 est destinée à amener le flux combustible chauffé 56 (ou le flux 62 issu du module de pré-réformage 61) au contact du système anodique 64.

L'unité de pile à combustible 30 comporte également une entrée 70 d'introduction du flux gazeux riche en dioxygène 16. En particulier, l'entrée 70 est destinée à amener le flux gazeux riche en dioxygène 16 au contact du système cathodique 66.

De préférence, l'installation 10 selon l'invention comprend également, en amont de l'entrée 70, un troisième système d'échangeur thermique 72. Lorsque l'installation 10 comprend une unité de stockage 24, le troisième système d'échangeur thermique 72 est typiquement situé entre l'unité de stockage 24 et l'entrée 70. Le troisième système d'échangeur thermique 72 est destiné à chauffer le flux gazeux riche en dioxygène 16, avant son introduction dans l'unité de pile à combustible 30.

L'unité de pile à combustible 30 comporte également une sortie 74 de récupération du flux gazeux anodique 36, issu du fonctionnement de l'unité de pile à combustible 30 et récupéré au niveau du système anodique 64.

L'unité de pile à combustible 30 comporte en outre une sortie 76 de récupération d'un flux gazeux cathodique appauvri en dioxygène 38, issu du fonctionnement de l'unité de pile à combustible 30 et récupéré au niveau du système cathodique 66.

La sortie 76 de récupération du flux gazeux cathodique 38 est reliée à l'installation 26.

Selon un mode de réalisation, la sortie 76 de récupération du flux gazeux cathodique 38 est reliée, en amont de l'installation 26, au troisième système d'échangeur thermique 72 de sorte que le flux gazeux cathodique 38 y soit refroidi, par échange thermique avec le flux gazeux riche en dioxygène 16, pour former un flux cathodique refroidi 80. Le troisième système d'échangeur thermique 72 comprend alors une sortie 78 de récupération du flux cathodique refroidi 80.

Ce mode de réalisation est avantageux en ce qu'il permet de chauffer le flux gazeux riche en dioxygène 16, avant son introduction dans l'unité de pile à combustible 30, par intégration thermique, sans nécessiter d'apport d'énergie extérieur.

Selon un mode de réalisation, toujours en amont de l'installation 26, la sortie 78 de récupération du flux cathodique refroidi 80 est reliée à un quatrième système d'échangeur thermique 82 destiné à refroidir le flux cathodique refroidi 80 pour former le flux gazeux appauvri en dioxygène 20. Le quatrième système d'échangeur thermique 82 comprend ainsi une sortie 83 de récupération du flux gazeux appauvri en dioxygène 20, ladite sortie 83 étant reliée à l'installation 26.

Selon un mode de réalisation, la sortie 74 de récupération du flux gazeux anodique 36 est reliée au second système d'échangeur thermique 44 de sorte que le flux gazeux anodique 36 soit refroidi par échange thermique avec le flux combustible préchauffé 50 (en l'absence d'unité de désulfurisation 57) ou avec le flux mixte 60 (lorsque l'installation comprend une unité de désulfurisation 57), pour former un flux anodique intermédiaire 84. Le second système d'échangeur thermique 44 comporte alors une sortie 86 de récupération du flux anodique intermédiaire 84.

De préférence, la sortie 86 de récupération du flux anodique intermédiaire 84 est reliée au premier système d'échangeur thermique 42 de sorte que le flux anodique intermédiaire 84 soit refroidi à nouveau par échange thermique avec le flux combustible d'alimentation 35 pour former un flux anodique pré-refroidi 87. Le premier système d'échangeur thermique 42 comporte une sortie 88 de récupération du flux anodique pré-refroidi 87. La sortie 88 est reliée à l'unité de post-traitement, de refroidissement et de condensation 32.

Ce mode de réalisation est avantageux en ce qu'il permet à la fois de chauffer le flux combustible d'alimentation 35, avant son introduction dans l'unité de pile à combustible 30, et de pré-refroidir le flux gazeux anodique 36, avant son traitement dans l'unité de captage de dioxyde de carbone 32, par intégration thermique sans nécessiter d'apport d'énergie extérieur.

L'unité de post-traitement, de refroidissement et de condensation 32 comprend typiquement un cinquième système d'échangeur thermique 89 et un sixième système d'échangeur thermique 90 destinés à refroidir le flux anodique pré-refroidi 87. En particulier, le cinquième système d'échangeur thermique 89 est destiné à refroidir le flux anodique pré-refroidi 87 pour former un flux intermédiaire 91. Le sixième système d'échangeur thermique 90 est, quant à lui, destiné à refroidir le flux intermédiaire 91 pour former un flux anodique refroidi 92.

De préférence, l'unité de post-traitement, de refroidissement et de condensation 32 comprend en outre, de préférence entre le cinquième système d'échangeur thermique 89 et le sixième système d'échangeur thermique 90, une unité de réaction de gaz à l'eau 93. L'unité de réaction de gaz à l'eau 93 est destinée à convertir au moins une partie du monoxyde de carbone CO présent dans le flux anodique pré-refroidi 87 en dioxyde de carbone CO₂ et en dihydrogène par réaction avec de la vapeur d'eau. Les unités de réaction de gaz à l'eau sont connues de l'homme du métier et ne seront pas décrites davantage dans la suite de la description. L'unité de réaction de gaz à l'eau 93 comprend alors une entrée 93' d'introduction du flux intermédiaire 91 et une sortie 94 de récupération d'un flux appauvri en monoxyde de carbone 95.

Ainsi, et lorsque l'unité de post-traitement, de refroidissement et de condensation 32 comprend une unité de réaction de gaz à l'eau 93, le sixième système d'échangeur thermique 90 est alimenté avec le flux appauvri en monoxyde de carbone 95 et non avec le flux combustible intermédiaire 91 comme indiqué ci-dessus.

Le sixième système d'échangeur thermique 90 est par ailleurs relié, en aval, à une série de systèmes de condenseurs 96, 98 destinés à condenser une partie de l'eau présente dans le flux anodique refroidi 92. Le premier système de condenseur 96 est destiné à condenser une première partie de l'eau présente dans le flux anodique refroidi 92 pour former un premier flux de condensat 100 et un flux gazeux intermédiaire 102. Le deuxième système de condenseur 98, placé à la suite du premier système de condenseur 96, est destiné à condenser une deuxième partie de l'eau présente dans le flux gazeux intermédiaire 102 pour former un second flux de condensat 104 et le flux anodique sec 40.

De préférence, le premier condenseur 96 est relié à un système de récupération d'eau liquide 106 destiné à séparer le premier flux de condensats 100 principalement aqueux pour former, au pied du système de récupération 106, un flux liquide 108 principalement aqueux et en tête du ballon 106 un flux gazeux de condensats 109. Avantageusement, le système de récupération 106 est relié à la sortie 57' de l'unité de désulfurisation 57 de sorte que le flux d'eau liquide 108 soit injecté dans le flux combustible désulfurisé 58, en amont de l'unité deuxième système d'échangeur thermique 44. Ainsi, le flux d'eau liquide 108 constitue le flux d'eau 59 défini précédemment

De préférence, l'unité de post-traitement, de refroidissement et de condensation 32 comprend en outre, entre le premier système de condenseur 96 et le deuxième système de condenseur 98, une unité de compression/soufflante 110, par exemple un compresseur, destiné à pressuriser le flux gazeux intermédiaire 102 avant son introduction dans le deuxième système de condenseur 98. L'unité de compression/soufflante 110 comprend alors une entée 110' d'introduction du flux gazeux intermédiaire 102 et une sortie 111 de récupération d'un flux anodique compressé 112.

Ainsi, et lorsque l'unité de post-traitement, de refroidissement et de condensation 32 comprend unité de compression/soufflante 110, le deuxième système de condenseur 98 est alimenté avec flux anodique compressé 112 et non avec flux gazeux intermédiaire 102 comme indiqué ci-dessus.

L'unité de captage de dioxyde de carbone 34 comprend typiquement une entrée 114 d'introduction du flux anodique sec 40, une sortie 116 de récupération du courant de dioxyde de carbone 18, et une sortie 118 de récupération du flux anodique appauvri en dioxyde de carbone 19.

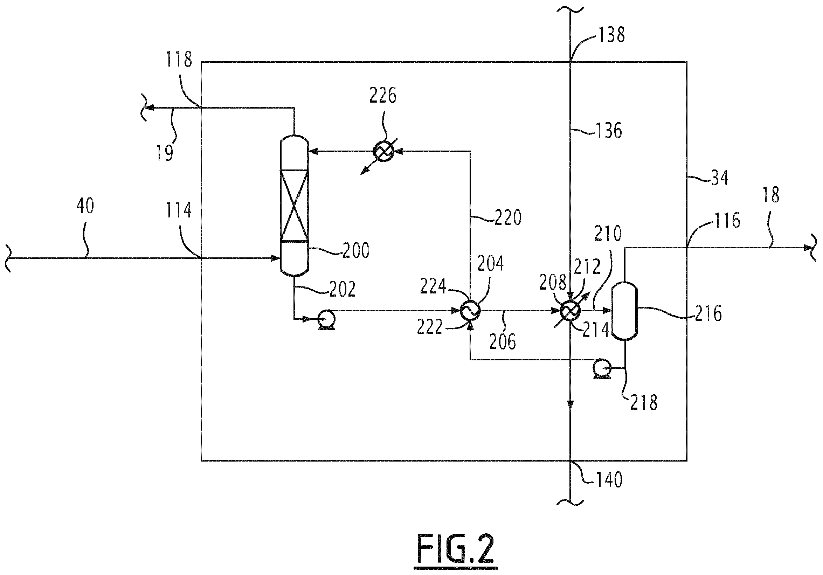

Une structure préférée de l'unité de captage de dioxyde de carbone 34 est décrite plus loin, en référence à la figure 2.

De préférence, la sortie 118 de récupération du flux anodique appauvri en dioxyde de carbone 19 est reliée à l'entrée de l'unité de prétraitement 28 de sorte que le flux anodique appauvri en dioxyde de carbone 19 soit injecté dans le flux combustible d'alimentation 35.

Ainsi, le flux combustible d'alimentation 35 entrant dans l'unité de prétraitement 28 est est constitué d'un mélange de la première partie 37 du flux gazeux combustible 14 et du flux anodique appauvri en dioxyde de carbone 19.

Selon un mode de réalisation, la sortie 118 de récupération du flux anodique appauvri en dioxyde de carbone 19 est également reliée à un four 120 de sorte qu'une partie 122 du flux anodique appauvri en dioxyde de carbone 19 soit injectée dans un four 120. L'autre partie 124 du flux anodique appauvri en dioxyde de carbone 19 est alors injectée dans le flux combustible d'alimentation 35 comme précisé ci-dessus.

Le four 120 comprend un bruleur 126 ainsi qu'un septième système d'échangeur thermique (non représenté).

L'emploi du four 120 permet de purger les gaz inertes éventuellement présents dans le flux gazeux combustible 14 et ainsi prévenir leur accumulation dans l'installation 10.

En particulier, la sortie 118 de récupération du flux anodique appauvri en dioxyde de carbone 19 est reliée au brûleur catalytique 126 de sorte que la partie 122 du flux anodique appauvri en dioxyde de carbone 19 soit injectée dans le brûleur catalytique 126, afin d'y être brûlée.

De préférence, selon ce mode de réalisation, la sortie 83 du quatrième système d'échangeur thermique 82 est également reliée au brûleur catalytique 126 de sorte qu'une partie 127 du flux appauvri en dioxygène 20 soit injectée dans le brûleur catalytique 126 pur y être brulée avec la partie 122 du flux anodique appauvri en dioxyde de carbone 19. L'autre partie 128 du flux appauvri en dioxygène 20 est alors amenée dans l'installation 26 ou rejetée dans l'atmosphère comme décrit précédemment.

Avantageusement, selon ce mode de réalisation, l'installation 22 est reliée au septième échangeur thermique (non représenté) situé dans le four 120 de sorte qu'une partie 129 du flux gazeux combustible 14 soit chauffée par la chaleur générée par la combustion de la partie 122 et de la partie 127 dans le brûleur 120, pour former un flux gazeux combustible réchauffé 132. Le four 120 comprend ainsi une sortie 130 de récupération du flux gazeux combustible réchauffé 132.

De préférence, la sortie 130 du four 120 est reliée à la sortie 48 du premier système d'échangeur thermique 42 de sorte que le flux gazeux combustible réchauffé 132 soit injecté dans le flux combustible préchauffé 50, pour former un flux combustible intermédiaire 133. Le flux combustible intermédiaire 133 est ensuite transmis dans l'unité de désulfurisation 57 ou directement dans le second système d'échangeurs thermiques 44 en lieu et place du flux combustible préchauffé 50.

Selon un mode de réalisation préféré, l'installation 10 comprend en outre un circuit fermé 134 d'échange thermique destiné à récupérer la chaleur générée dans une ou plusieurs parties de l'installation en vue de la transférer dans une autre partie de l'installation de manière à la valoriser.

De préférence, le circuit fermé 134 d'échange thermique est destiné à apporter la chaleur nécessaire au fonctionnement de l'unité de captage de dioxyde de carbone 34.

De préférence, le circuit fermé 134 est destiné à faire circuler un fluide caloporteur 136. Le fluide caloporteur peut consister en de l'eau liquide pressurisée, ou encore en une huile caloporteuse. Un système de fluide caloporteur basé sur l'utilisation de la vapeur d'eau pourrait être également considéré.

Le fonctionnement du circuit fermé 134 d'échange thermique nécessite un certain nombre d'équipements supplémentaires (non représentés tels qu'un ou plusieurs ballons d'expansion, des pompes, des systèmes de vannage, ...). Ces équipements nécessaires sont bien connus de l'homme du métier et ne seront donc pas décrit davantage dans la suite de la description.

Selon ce mode de réalisation, l'unité de captage de dioxyde de carbone 34 comporte en outre une entrée 138 d'introduction du fluide caloporteur dans l'unité de captage de dioxyde de carbone 34, et une sortie 140 de récupération du fluide caloporteur en sortie de l'unité de captage de dioxyde de carbone 34.

Toujours selon ce mode de réalisation, la sortie 140 est reliée au sixième système d'échangeur thermique 90 de sorte que le fluide caloporteur 136 sortant de l'unité de captage de dioxyde de carbone 34 soit chauffée par échange thermique avec le flux intermédiaire 91 (en l'absence d'unité de réaction 93) ou avec le flux appauvri en monoxyde de carbone 95 (lorsque l'unité de réaction 93 est présente). Le sixième système d'échangeur thermique 90 comporte ainsi une entrée 142 d'introduction du fluide caloporteur 136 en provenance de l'unité de captage de dioxyde de carbone 34, et une sortie 144 de récupération du fluide caloporteur 136.

La sortie 144 du sixième échangeur thermique 90 est reliée au cinquième système d'échangeur thermique 89 de sorte que le fluide caloporteur 136 sortant du sixième système d'échangeur thermique 90 soit chauffée à nouveau par échange thermique avec le flux gazeux anodique pré-refroidi 87. Le cinquième système d'échangeur thermique 89 comporte ainsi une entrée 146 d'introduction du fluide caloporteur 136 en provenance du sixième système d'échangeur thermique 90, et une sortie 148 de récupération du fluide caloporteur 136.

La sortie 148 du cinquième système d'échangeur thermique 89 est par ailleurs reliée au quatrième système d'échangeur thermique 82 de sorte que le fluide caloporteur 136 sortant du cinquième système d'échangeur thermique 89 soit chauffée à nouveau par échange thermique avec le flux cathodique refroidi 80. Le quatrième système d'échangeur thermique 82 comporte ainsi une entrée 150 d'introduction du fluide caloporteur 136 en provenance du cinquième système d'échangeur thermique 89, et une sortie 152 de récupération du fluide caloporteur 136.

La sortie 152 du quatrième système d'échangeur thermique 82 est enfin reliée à l'entrée 138 de l'unité de captage de dioxyde de carbone 34 de sorte que le fluide caloporteur 136 soit refroidi en transmettant sa chaleur par échange thermique à l'intérieur de l'unité de captage de dioxyde de carbone 36.

L'unité de captage de dioxyde de carbone 34 va maintenant être décrite en référence à la figure 2.

Comme indiqué ci-dessus, l'unité de captage de dioxyde de carbone 34 comporte une entrée 114 d'introduction du flux anodique sec 40.

L'unité de captage de dioxyde de carbone 34 comprend typiquement un absorbeur 200 comprenant un solvant liquide destiné à extraire le dioxyde de carbone présent dans le flux anodique sec 40 de manière à former, en tête de l'absorbeur 200, le flux anodique appauvri en dioxyde de carbone 19 et, un flux de pied de solvant liquide 202 riche en dioxyde de carbone.

L'unité de captage de dioxyde de carbone 34 comprend également un septième système d'échangeur thermique 204 destiné à chauffer le flux 202 pour former un flux de pied préchauffé 206.

L'unité de captage de dioxyde de carbone 34 comprend en outre un huitième système d'échangeur thermique 208 destiné à chauffer le flux de pied préchauffé 206 pour former un flux de pied chauffé 210.

Selon un mode de réalisation, le huitième système d'échangeur thermique 208 comporte une entrée 212 d'introduction du fluide caloporteur 136 et une sortie 214 de récupération du fluide caloporteur de sorte que le flux préchauffé 206 soit chauffé au niveau du huitième système d'échangeur thermique 208 par échange thermique avec le fluide caloporteur 136.

L'unité de captage de dioxyde de carbone 34 comprend en outre un ballon 216 relié au huitième système d'échangeur thermique 212 et destiné à recevoir le flux de pied chauffé 210. Le ballon 216 est destiné à séparer le flux de pied chauffé 210 pour former, en tête du ballon 216, le courant de dioxyde de carbone 18 et, en pied du ballon 216, un courant de solvant liquide appauvri en dioxyde de carbone 218 destiné à être injecté en tête de l'absorbeur 200.

De préférence, le pied du ballon 216 est relié au septième système d'échangeur thermique 204 de sorte que le courant de solvant liquide appauvri en dioxyde de carbone 218 soit refroidi par échange thermique avec le flux de pied liquide 202 pour former un courant de solvant liquide appauvri en dioxyde de carbone et pré-refroidi 220. Le septième système d'échangeur thermique 204 comporte ainsi une entrée 222 d'introduction du courant de solvant liquide appauvri en dioxyde de carbone 218 et une sortie 224 de récupération du courant de solvant liquide appauvri en dioxyde de carbone et pré-refroidi 220.

Avantageusement, l'unité de captage de dioxyde de carbone 34 comprend en outre un neuvième système d'échangeur thermique 226 destiné à refroidir encore le courant de solvant liquide appauvri en dioxyde de carbone et pré-refroidi 220 avant d'être injecté en tête de l'absorbeur 200.

Les courants décrits dans l'installation sont confondus avec les conduites qui les transportent.

La mise en œuvre d'un premier procédé selon l'invention va maintenant être décrite.

Le procédé selon l'invention comprend tout d'abord la fourniture d'au moins un flux gazeux combustible 14, en provenance de l'installation 22 (ou d'un réseau de conduite de gaz), et d'au moins un flux gazeux riche en dioxygène 16, en provenance de l'installation 24.

Une partie 37 du flux gazeux combustible 14 est tout d'abord mélangé avec la partie 124 du flux anodique appauvri en dioxyde de carbone 19 récupéré en sortie 118 de l'unité de captage de dioxyde de carbone 34 l'unité de prétraitement 28 afin de former le flux combustible d'alimentation 35.

Le flux combustible d'alimentation 35 est introduit dans l'unité de prétraitement 28 afin d'y être chauffé et pré-traité. A cet effet, le flux gazeux combustible 14 est introduit dans le premier système d'échangeur thermique 42 dans lequel il est chauffé une première fois. Le flux combustible préchauffé 50, récupéré en sortie 48 du premier système d'échangeur thermique 42, est ensuite introduit dans le second système d'échangeur thermique 44 pour y être à nouveau chauffé et former en sortie 54 le flux combustible chauffé 56.

De préférence, le flux combustible d'alimentation 35 présente une température allant de 0 °C à 50 °C, plus préférentiellement de 10 °C à 30°C.

De préférence, le flux combustible d'alimentation 35 est chauffé dans le premier échangeur thermique 42 à une température allant de 100°C à 450°C, de préférence allant de 200°C à 300°C.

Le flux combustible d'alimentation 35 peut également subir une étape préalable de désulfurisation de manière à former un flux combustible désulfurisé 58. La présence de soufre dans le flux combustible d'alimentation 35 est susceptible de conduire à une usure prématurée de l'installation, notamment par empoisonnement de l'unité de pile à combustible 30. Une étape de désulfurisation peut alors être nécessaire pour réduire significativement la teneur en soufre dans le flux combustible d'alimentation 35, de préférence pour éliminer totalement le soufre présent.

Le flux combustible d'alimentation 35 de départ peut typiquement présenter une teneur en soufre de 0 à 100 ppm, notamment de 0 à 10 ppm. De préférence, après l'étape de désulfurisation, le flux désulfurisé 58 présente alors une teneur en soufre inférieure ou égale à 1 ppm, plus préférentiellement inférieure ou égale à 0,1 ppm.

Avantageusement, l'étape de désulfurisation est réalisée par l'introduction du flux combustible préchauffé 50 dans l'unité de désulfurisation 57. De préférence, le flux désulfurisé 58 récupéré en sortie de l'unité de désulfurisation 57 est ensuite mélangé avec un flux d'eau 59 de manière à former un flux mixte 60. Le flux mixte 60 est ensuite envoyé dans le second système d'échangeur thermique 44 afin d'y être chauffé.

De préférence, le flux combustible préchauffé 50 (ou le flux mixte 60 lorsque le procédé comprend une étape de désulfurisation) est chauffé dans le second échangeur thermique 44 à une température allant de 300°C à 600 °C, de préférence allant de 400°C à 500°C.

Le flux combustible chauffé 56 récupéré en sortie du second système d'échangeur thermique 44 peut également subir, au sein de l'unité de prétraitement 28, une étape préalable de pré-reformage. Lorsqu'ils sont chauffés à une température élevée, typiquement supérieure à 500-600°C, les composés hydrocarbonés utilisés comme combustibles, notamment les composés hydrocarbonés en C₂⁺, sont susceptibles de se fragmenter par craquage thermique, conduisant ainsi à la formation non-désirée de dépôts dans l'installation. Une étape préalable de pré-reformage permet de prévenir ce phénomène de craquage thermique en convertissant le flux combustible chauffé 56 en un flux 62 constitué de dihydrogène H₂, de monoxyde de carbone CO, de dioxyde de carbone, d'eau et d'une partie du méthane présent dans le gaz combustible de départ et n'ayant pas réagi. Cette conversion est par exemple réalisée au contact d'un catalyseur du type nickel.

De préférence, l'étape de pré-réformage est réalisée par passage du flux combustible chauffé 56 dans l'unité de pré-réformage 61. Le flux 62 récupéré en sortie de l'unité de pré-réformage 61 est ensuite envoyé dans l'unité de pile à combustible 30.

Le flux 62 récupéré en sortie de l'unité de pré-réformage 61 présente typiquement une teneur en dihydrogène H₂ allant de 20% à 50% en volume, de préférence de 30% à 40% en volume.

Le flux 62 récupéré en sortie de l'unité de pré-réformage présente typiquement une teneur en monoxyde de carbone CO allant de 0% à 15% en volume, de préférence de 0% à 10% en volume.

De préférence, la part dans le flux 62 de combustible de départ n'ayant pas réagi est inférieure à 50% en volume, plus préférentiellement inférieure à 30% en volume, notamment entre 20% et 30% en volume.

De manière simultanée, le flux gazeux riche en dioxygène 16 est chauffé par passage dans le troisième système d'échangeur thermique 72.

De préférence, le flux gazeux riche en dioxygène 16 est chauffé dans le troisième échangeur thermique 72 à une température allant de 500°C à 800°C, de préférence allant de 600°C à 700°C.

Le flux gazeux riche en dioxygène 16 chaud est ensuite introduit dans l'unité de pile à combustible 30, au niveau du système de cathodes 66.

L'unité de pile à combustible 30, alimentée en continue avec le flux combustible chauffé 56 (ou le flux 62 récupéré en sortie de l'unité de pré-réformage 61) et le flux gazeux riche en dioxygène 16 est ensuite mise à fonctionner.

Pour cela, le flux combustible chauffé 56 (ou le flux 62, lorsqu'une étape de préformage est réalisée) est introduit dans l'unité de pile à combustible 30, au niveau de l'entrée 68. En particulier, le flux combustible chauffé 56 (ou le flux 62) est injecté au niveau du système d'anodes 64.

Le flux gazeux riche en dioxygène 16 chauffé est quant à lui introduit au niveau de l'entrée 70 de l'unité de pile à combustible 30. En particulier, le flux gazeux riche en dioxygène 16 chaud est injecté au niveau du système de cathodes 66.

En entrant dans l'unité de pile à combustible 30, le flux combustible chauffé 56 (ou le flux 62) subit une première étape de réformage au cours de laquelle l'intégralité du combustible de départ est convertie en un gaz de synthèse constitué de dihydrogène H₂ et de monoxyde de carbone CO.

Au contact du système d'anodes 64, le dihydrogène H₂ se dissocie alors en protons H⁺ et en électrons. Les électrons ainsi libérés s'accumulent au niveau du système d'anodes 64 et sont transférés vers le système de cathodes 66 de l'unité 30 au moyen d'un circuit extérieur, le déplacement des électrons du système d'anodes 64 vers le système de cathodes 66 générant le courant électrique 12.

Au niveau du système de cathodes 66, les électrons acheminés sont fixés par le dioxygène O₂ présent dans le flux gazeux riche en dioxygène 16, résultant en la transformation des molécules de dioxygène O₂ en ions oxygène O²⁻.

Les ions oxygènes O²⁻ ainsi formés traversent ensuite l'électrolyte pour passer du côté de du système d'anodes 64 au niveau duquel ils réagissent d'une part avec les protons H⁺ générés précédemment pour former de l'eau H₂O et d'autre part avec le monoxyde de carbone CO pour former du dioxyde de carbone CO₂.

Le flux gazeux anodique 36 et le flux gazeux cathodique 76 sont ensuite récupérés en sortie de l'unité de pile à combustible 30.

En particulier, le flux gazeux cathodique 38, correspondant au flux gazeux résiduel récupéré en sortie de la cathode 66, est récupéré en sortie 76 de l'unité 30. Le flux 38 présente une teneur réduite en dioxygène par rapport au flux gazeux riche en dioxygène 16 de départ.

Typiquement, le flux gazeux cathodique 38 présente une teneur en dioxygène inférieure ou égale à 20% en mole, de préférence de 5% à 15% en mole.

Le flux gazeux cathodique 38 est ensuite acheminé vers l'installation 26.

Selon un mode de réalisation, avant d'atteindre l'installation 26, le flux gazeux cathodique 38 est refroidi par passage dans une série de systèmes d'échangeurs thermiques 72, 82. De préférence, le flux gazeux cathodique 38 est tout d'abord introduit dans le troisième système d'échangeur thermique 72 dans lequel il est refroidi une première fois par échange thermique avec le flux gazeux riche en dioxygène 16 pour former le flux cathodique refroidi 80.

Ce mode de réalisation est avantageux en ce qu'il permet de chauffer le flux gazeux riche en dioxygène 16 d'entrée, et de refroidir le flux gazeux cathodique 38 de sortie par intégration thermique, sans nécessiter d'apport d'énergie extérieur.

De préférence, le flux cathodique refroidi 80, récupéré en sortie du troisième système d'échangeur thermique 72, est ensuite refroidi à nouveau par passage dans le quatrième système d'échangeur thermique 82 pour récupérer en sortie le flux gazeux appauvri en dioxygène 20. Le flux gazeux appauvri en dioxygène 20 est ensuite acheminé vers l'installation 26.

De préférence, le flux gazeux cathodique 38 est refroidi dans le troisième système d'échangeur thermique 72 jusqu'à une température allant de 50°C à 250°C, de préférence allant de 100°C à 200°C.

De préférence, le flux cathodique refroidi 80 est refroidi dans le quatrième système d'échangeur thermique 82 jusqu'à une température allant de 50°C à 200°C, de préférence allant de 100°C à 150°C.

Le flux gazeux anodique 36, correspond au flux gazeux résiduel récupéré en sortie du système d'anodes 64, est récupéré en sortie 74 de l'unité 30. Le flux 36 est constitué d'un mélange de dioxyde de carbone CO₂, d'eau H₂O résultant du fonctionnement de l'unité de pile à combustible 30 mais aussi de monoxyde de carbone CO et de dihydrogène H₂ n'ayant pas réagis.

De préférence, au moins 30% en volume du gaz de synthèse de départ est récupéré dans le flux gazeux anodique, plus préférentiellement de 30% à 50% en volume.

De préférence, le flux gazeux anodique 36 présente une teneur en dioxyde de carbone supérieure à 10% en volume, plus préférentiellement de 10% à 40% en volume, typiquement de 20% à 40% en volume.

Le flux gazeux anodique 36, récupéré en sortie de l'unité de pile à combustible 30, présente typiquement une température supérieure à 500°C, de préférence de 750°C à 850°C.

L'intégralité du flux gazeux anodique 36, récupéré en sortie 74 de l'unité de pile à combustible 30, est ensuite introduite dans l'unité de post-traitement, de refroidissement et de condensation 32 afin d'y être refroidi et d'éliminer l'eau formée.

Selon un mode de réalisation avantageux, avant son introduction dans l'unité de post-traitement, de refroidissement et de condensation 32, le flux gazeux anodique 36 est pré-refroidi par passage dans le second système d'échangeur thermique 44, puis dans le premier système d'échangeur thermique 42. En particulier, le flux gazeux anodique 36 est refroidi une première fois dans le second système d'échangeur thermique 44 par échange thermique avec le flux combustible préchauffé 50 (ou le flux combustible intermédiaire 133). Le flux anodique intermédiaire 84 ainsi formé est ensuite refroidi à nouveau dans le premier échangeur thermique 42 par échange thermique avec le flux combustible d'alimentation 35 de départ. Un flux anodique pré-refroidi 87 est ainsi obtenu en sortie du premier échangeur thermique 42.

De préférence, le flux gazeux anodique 36 est refroidi dans le second système d'échangeur thermique 44 jusqu'à une température allant de 550°C à 750°C, de préférence allant de 650°C à 750°C.

De préférence, le flux anodique intermédiaire 84 est refroidi dans le quatrième échangeur thermique 82 jusqu'à une température allant de 300°C à 500°C, de préférence allant de 400°C à 500°C.

Le flux anodique pré-refroidi 87 est ensuite introduit dans l'unité de post-traitement, de refroidissement et de condensation 32.

Ce mode de réalisation est avantageux en ce qu'il permet de chauffer le flux combustible d'alimentation 35, avant son introduction dans l'unité de pile à combustible 30, et de pré-refroidir le flux gazeux anodique 36, par intégration thermique sans nécessiter d'apport d'énergie extérieur.

L'injection du flux gazeux combustible réchauffé 132, en aval du premier système d'échangeur thermique 46 permet également de chauffer le flux combustible d'alimentation 35, avant son introduction dans l'unité de pile à combustible 30, par intégration thermique sans nécessiter d'apport d'énergie extérieur.

Au niveau de l'unité de post-traitement, de refroidissement et de condensation 32, le flux gazeux anodique 36 (ou le flux anodique pré-refroidi 87, en cas de pré-refroidissement) est refroidi par passage dans le cinquième système d'échangeur thermique 89 et dans le sixième système d'échangeur thermique 90. En particulier, le flux gazeux anodique 36 (ou le flux anodique pré-refroidi 87) est refroidi une première fois dans le cinquième système d'échangeur thermique 89. Le flux intermédiaire 91 ainsi formé est ensuite refroidi à nouveau dans le sixième système d'échangeur thermique 90. Un flux anodique refroidi 92 est ainsi obtenue en sortie du sixième échangeur thermique 90.

Selon un mode de réalisation préféré, le flux gazeux anodique 36 (ou le flux anodique pré-refroidi 87) peut subir en outre une étape de conversion de type réaction de gaz à l'eau destinée à convertir une fraction importante du monoxyde de carbone CO présent dans le flux gazeux anodique 36 (ou le flux anodique pré-refroidi 87) en dioxyde de carbone CO₂ et en dihydrogène H₂ par réaction avec la vapeur d'eau présente dans le flux 36 (ou le flux anodique pré-refroidi 87). Cette étape vise à éliminer une fraction importante du monoxyde de carbone CO présent dans le flux 36 (ou le flux 87) en vue son traitement dans l'unité de captage de dioxyde de carbone 34.

De préférence, l'étape de conversion de gaz à l'eau est réalisée par l'introduction du flux intermédiaire 91 dans l'unité de réaction de gaz à l'eau 93. Le flux appauvri en monoxyde de carbone 95 récupéré en sortie 94 de l'unité de réaction de gaz à l'eau 93 est ensuite envoyé dans le sixième système d'échangeur thermique 90 afin de poursuivre son refroidissement.

Le flux anodique refroidi 92 est ensuite introduit dans une série de condenseurs 96, 98 afin de condenser l'eau contenue dans le flux anodique refroidi 92. En particulier, le flux gazeux refroidi 92 est introduit dans le premier condenseur 96 pour former le premier flux de condensat 100 et le flux gazeux intermédiaire 102. Le flux gazeux intermédiaire 102 est ensuite introduit dans le second condenseur 98 pour finaliser la condensation de l'eau contenue dans le flux anodique refroidi 92 et ainsi former le second flux de condensat 104 et le flux anodique sec 40.

De préférence, le premier flux de condensat 100 est introduit dans le ballon 106 pour former, au pied du ballon 106, le flux d'eau liquide 108, et en tête du ballon 106, le flux gazeux de condensats 109. Avantageusement, le flux d'eau liquide 108 est ensuite injecté, en amont du premier système d'échangeur thermique 44, dans le flux combustible préchauffé 50 (ou dans le flux combustible désulfurisé 58) afin d'y être recyclé et former le flux mixte 60. L'eau H₂O est ainsi utilisée comme réactif dans l'unité de pré-réformage 61.

Lors du démarrage de l'installation 10, le flux combustible chauffé 56 ne contient pas de molécule d'eau, un ajout de vapeur d'eau temporaire est envisageable pour cette phase de démarrage du procédé. Une fois les réactions électrochimiques de l'unité de pile à combustible 30 initiées, ces réactions produisant de l'eau, le flux gazeux anodique 36 est enrichi en molécules d'eau. Ces molécules d'eau peuvent être ainsi recyclées grâce au condenseur 96 et au ballon de récupération 106 dans le flux combustible préchauffé 50 (ou dans le flux combustible désulfurisé 58). Le système d'ajout temporaire de vapeur d'eau n'est alors plus nécessaire. Cette teneur en eau peut être contrôlée par le calcul d'un ratio « eau/carbone » (« *Steam*/*Carbon* » en anglais) qui correspond à la quantité d'eau présente en entrée du module de pré-reformage 61 divisée par la quantité de carbone présente également en entrée du module de pré-reformage 61. Ce ratio est typiquement supérieur ou égal à 1, préférentiellement compris entre 1,5 et 3. La bonne maîtrise du ratio eau/carbone permet de s'affranchir des risques de formation de dépôt de coke au sein du module de pré-reformage 61 et de l'unité de pile à combustible 30.

Selon un mode de réalisation, le procédé comprend en outre une étape de pressurisation du flux gazeux intermédiaire 102, de préférence avant son introduction dans le second condenseur 98.

Ainsi, selon ce mode de réalisation, le flux gazeux intermédiaire 102 est directement introduit dans l'unité de compression/soufflante 110. Un flux anodique compressé 111 est alors récupéré en sortie 111 de l'unité de compression/soufflante 110.

Le flux anodique compressé 111 est ensuite transféré dans le second condenseur 98.

L'unité de compression/soufflante 110 est placée entre les deux condenseurs 96 et 98 afin de refroidir le flux anodique compressé 111 récupéré en sortie 111 de l'unité 110 et dont la température a augmenté au cours de l'étape de compression/soufflante.

Ainsi, l'unité de captage de dioxyde de carbone 34 peut opérer à une température minimisée lui permettant d'augmenter le taux de charge du solvant liquide de pied et ainsi améliorer les performances de l'unité 34. Cette unité de compression/soufflante 110 est avantageuse en ce qu'elle permet de compensant les pertes de charge accumulées au fur et à mesure du procédé dans les équipements, notamment au niveau de l'absorbeur 200 de l'unité de capture de dioxyde de carbone 34.

D'autres configurations d'unités de compressions/soufflantes 110 pourraient être envisagées. Par exemple, une unité de compression/soufflante additionnelle à celle existante ou en remplacement de l'unité 110 pourrait être installée en aval de l'unité de captage de dioxyde de carbone 34 afin d'augmenter la pression du flux appauvri en dioxyde de carbone 19.

De préférence, le flux gazeux intermédiaire 102 présente une pression allant de 0,9 bar à 2 bars, plus préférentiellement de 1 bar à 1,1 bars.

En sortie 111 de l'unité de compression 110, le flux anodique compressé 112 présente typiquement une pression allant de 1,3 bars à 5 bars, de préférence de 1,4 bars à 2 bars.

Le flux anodique sec 40 est ensuite introduit dans l'unité de captage de dioxyde de carbone 34 pour former d'une part le courant de dioxyde de carbone 18, et d'autre part le flux anodique appauvri en dioxyde de carbone 19.

Pour cela, en référence à la figure 2, le flux anodique sec 40 est introduit dans l'absorbeur 200 à travers l'entrée 114 d'introduction. A l'intérieur de l'absorbeur 200, le flux anodique sec 40 est mis en contact avec un solvant liquide apte à absorber le dioxyde de carbone.

Différents solvants liquides aptes à absorber le dioxyde de carbone sont connus de l'homme du métier. A titre d'exemple, on peut notamment citer des solutions aqueuses aminées, d'autres solvants chimiques tels que le carbonate de sodium ou de potassium, ou encore d'autres familles de solvant de type physique ou ionique. Des exemples de solvants sont décrits dans l'article Solvents for Carbon Dioxide Capture de Fernando Vega, et al. publié le 16 août 2018 de la revue IntechOpen.

De préférence, le solvant liquide est choisi parmi les solutions aqueuses aminées aptes à adsorber du dioxyde de carbone.

Les procédés d'absorption chimique utilisant des solutions aqueuses aminées aptes à absorber du dioxyde de carbone sont bien connus de l'homme de métier et ne seront pas davantage décrits ici. A titre d'exemple de solutions aqueuses aminées adaptées à l'invention, on peut notamment citer les solutions composées d'un ou de plusieurs des composés suivants : monoéthanolamine, diéthanolamine, N-méthyldiéthanolamine, pipérazine, 2-Amino-2-méthylpropan-1-ol, Bis(2-hydroxypropyl)amine, 1-méthylpipérazine, diméthylaminoéthanol.

Un certain nombre d'équipements et de systèmes utilitaires nécessaires au bon fonctionnement des unités d'absorption sont connus de l'homme du métier et ne seront donc pas décrit davantage dans la suite de la description.

Au contact du flux anodique sec 40, le solvant liquide absorbe le dioxyde de carbone présent dans le flux anodique sec 40 pour former un flux de pied liquide 202 constitué de du solvant liquide chargé en dioxyde de carbone, et en tête de l'absorbeur 200, le flux anodique appauvri en dioxyde de carbone 19.

Le flux anodique appauvri en dioxyde de carbone 19 comprend typiquement de 10% à 60% en volume de dioxyde de carbone CO₂, de préférence de 30% à 50% en volume.

Le flux de pied liquide 202 constitué du solvant liquide chargé en dioxyde de carbone est ensuite chauffé dans le septième système d'échangeur thermique 204 pour former un flux de pied préchauffé 206. Le flux de pied préchauffé 206 est ensuite introduit dans le huitième système d'échangeur thermique 208 dans lequel il est à nouveau chauffé de manière à ce que le dioxyde de carbone absorbé le solvant liquide soit partiellement relargué sous forme gazeuse. Typiquement, le flux de pied préchauffé 206 chauffé dans le huitième système d'échangeur thermique 208 à une température supérieure à 70°C, de préférence supérieure à 80°C, notamment proche de 90°C. Le flux de pied chauffé 210, récupéré en sortie du huitième système d'échangeur thermique 208, est introduit dans le ballon 216 pour former, en tête du ballon 216, le courant de dioxyde de carbone 18, et en pied du ballon 216, un courant de solvant liquide appauvri en dioxyde de carbone 218.

Le courant de solvant liquide appauvri en dioxyde de carbone 218 est ensuite réinjecté dans l'absorbeur 200 pour y être recyclé.

Le courant de solvant liquide appauvri en dioxyde de carbone 218 prélevé au pied du ballon 216 comprend alors le solvant liquide de départ ainsi qu'une partie du dioxyde de carbone absorbé qui n'a pas été relargué par la détente dans le ballon 216 à la suite du chauffage dans le septième 204 et le huitième 212 systèmes d'échangeurs thermiques.

Typiquement, au moins 15% du solvant liquide est encore chargé en dioxyde de carbone, de préférence au moins 35%, plus préférentiellement de 55 à 65%.

Autrement dit, le courant de solvant liquide appauvri en dioxyde de carbone 218 présente une teneur en dioxyde de carbone supérieure ou égale à 0,1 mole de CO2 par mole de solvant aminé en base sèche, de préférence de 0,15 à 0.4 mole de CO2 par mole de solvant aminé en base sèche, encore plus préférentiellement de 0,30 à 0,35 mole de CO2 par mole de solvant aminé en base sèche.

De préférence, avant d'être réinjecté dans l'absorbeur 200, le courant de solvant liquide appauvri en dioxyde de carbone 218 est refroidi dans le septième système d'échangeur thermique 204 par échange thermique avec le flux de pied liquide 220 provenant de l'absorbeur 200.

Le courant de solvant liquide appauvri en dioxyde de carbone 218 peut également subir une étape de refroidissement supplémentaire avant son injection dans l'absorbeur 200, par exemple par passage dans le neuvième système d'échangeur thermique 226, utilisant une source réfrigérante extérieure.

Selon un mode de réalisation, le flux de pied préchauffé 206 est chauffé au niveau du huitième système d'échangeur thermique 208 par échange thermique avec le circuit fermé 134 d'échange thermique.

De préférence, le flux de pied préchauffé 206 est chauffé par échange thermique avec le fluide caloporteur 136 circulant dans le circuit fermé 134.

De préférence, le fluide caloporteur 136 est chauffé par échange thermique avec le flux intermédiaire 91 (ou le flux appauvri en monoxyde de carbone 95), et/ou avec le flux gazeux anodique pré-refroidi 87 et/ou avec le flux cathodique refroidi 80.

Une partie 124 du flux anodique appauvri en dioxyde de carbone 19, récupéré en sortie du de l'unité de captage de dioxyde de carbone 34, est ensuite mélangée avec la première partie 37 du flux gazeux combustible 14 pour former le flux combustible d'alimentation 35.

La partie 124 du flux anodique appauvri en dioxyde de carbone 19 est ainsi recyclée dans le procédé.

De préférence, la partie 124 du flux anodique appauvri en dioxyde de carbone 19 représente au moins 30 % en volume du flux combustible d'alimentation 35, plus préférentiellement de 50 % à 85 % en volume, encore plus préférentiellement de 70 % à 80 % en volume.

De préférence, la première partie 37 du flux gazeux combustible 14 représente au moins 70 % en volume du flux combustible d'alimentation 35, plus préférentiellement de 15 % à 50 % en volume, encore plus préférentiellement de 20 % à 30 % en volume.

Le restant du flux anodique appauvri en dioxyde de carbone 19 (partie 122) est par ailleurs injectée dans le four 120 afin d'y être brûlée. La combustion de la partie 122 permet alors d'éviter l'accumulation de gaz inertes dans l'installation 10.

De préférence, au moins 1% en masse du flux anodique appauvri en dioxyde de carbone 19 est injecté dans le brûleur, plus préférentiellement de 5% en masse/volume à 20% en masse.

Le pourcentage de flux appauvri en dioxyde de carbone 19 à brûler dépend directement de la teneur en gaz inertes accumulés dans le flux appauvri en dioxyde de carbone 19. La détermination d'un pourcentage adapté appartient à l'homme du métier.

Selon un certain mode de réalisation, une partie du flux gazeux combustible 14 peut également être injectée dans le four 120, notamment dans le brûleur catalytique 126, afin d'être brûlé avec la partie 122. Ce mode de réalisation peut par exemple être mis-en-œuvre pendant les phases de démarrage de l'installation 10 afin de pouvoir assurer un bon fonctionnement de l'installation 10.

La quantité du flux gazeux combustible 14 injectée dans le four 120 est alors ajustée afin de limiter les émissions globales de l'installation 10 en dioxyde de carbone. De préférence, malgré ces émissions, au moins 80% en mole du dioxyde de carbone produit au cours du procédé de l'invention est capturé, de préférence au moins 90% en mole, plus préférentiellement de 90 à 99% en mole.

Avantageusement, une partie 127 du flux appauvri en dioxygène 20 est également injecté dans le four 120, notamment dans le brûleur catalytique 126, afin d'y être brûlé avec la partie 122 du flux anodique appauvri en dioxyde de carbone 19. L'autre partie 128 du flux appauvri en dioxygène 20 est alors acheminée vers l'installation 26.

De préférence, au moins 1% en masse du flux appauvri en dioxygène 20 est injecté dans le four 120, plus préférentiellement de 5% en masse/volume à 20% en masse.

De préférence, au moins une partie 129 du flux gazeux combustible 14 de départ est mise à circuler dans le four 120, notamment dans le septième système d'échangeur thermique (non représenté) du four 120, afin d'y être chauffé par la chaleur générée par la combustion de la partie 122 et de la partie 127. Le flux gazeux combustible réchauffé 132, récupéré en sortie 130 du four 120, notamment du septième système d'échangeur thermique, est ensuite injecté dans le flux combustible préchauffé 50 pour former le flux combustible intermédiaire 133.

De préférence, au moins 5% en volume du flux gazeux combustible 14 est chauffé au niveau du four 120, plus préférentiellement de 10% en volume à 40% en masse.

De préférence, la partie 124 du flux anodique appauvri en dioxyde de carbone 19 représente au moins 20 % en volume du flux combustible intermédiaire 133, plus préférentiellement de 30 % à 60 % en volume, encore plus préférentiellement de 40 % à 50 % en volume.

De préférence, la première partie 37 du flux gazeux combustible 14 représente au moins 5 % en volume du flux combustible intermédiaire 133, plus préférentiellement de 10 % à 35 % en volume, encore plus préférentiellement de 15 % à 25 % en volume.

L'installation et le procédé selon l'invention permettent ainsi la production d'un courant électrique 12 au moyen d'une unité de pile à combustible 30 tout en permettant de récupérer le dioxyde de carbone CO₂ formé.

L'invention se base sur le constat qu'une augmentation de la concentration en dioxyde de carbone dans le flux combustible d'alimentation 35 n'affecte pas ou très peu le fonctionnement de l'unité de pile à combustible 30. Le dioxyde de carbone est en effet un gaz neutre pour l'unité de pile à combustible 30 puisqu'il ne participe à aucune réaction susceptible de se produire à l'intérieur de l'unité de pile à combustible 30. Il peut donc être concentré de manière significative et être recyclé dans l'installation 10 sans affecter de manière significative les performances de l'unité de pile à combustible 30. L'unité de pile à combustible 30 nécessitant la présence de combustible, il est évident que cette augmentation de la concentration en dioxyde de carbone est limitée afin qu'une quantité suffisante de gaz combustible soit injectée dans l'unité de pile à combustible 30.

En particulier, l'installation et le procédé selon l'invention permettent de réduire significativement le besoin énergétique associé à la récupération du dioxyde de carbone en proposant de recycler une partie significative du dioxyde de carbone formé au cours du procédé directement dans le flux combustible d'alimentation 35. En particulier, le recyclage du dioxyde de carbone conduit à une augmentation de la teneur en dioxyde de carbone dans l'ensemble de l'installation 10, et notamment dans le flux gazeux anodique 36 récupéré en sortie de l'unité de pile à combustible 30. Cette augmentation de la teneur en dioxyde de carbone dans les effluents à traiter permet alors de réduire significativement l'énergie nécessaire à la récupération du dioxyde de carbone.

En effet, l'augmentation de la teneur en dioxyde de carbone dans les effluents à traiter permet de s'affranchir du besoin de régénérer de manière intense le solvant liquide utilisé dans l'unité de captage 34 : une régénération partielle du solvant liquide, typiquement de 40 à 50% en masse du solvant liquide, est suffisante. L'énergie nécessaire à la régénération du solvant liquide est ainsi significativement réduite. Ainsi, la régénération du solvant liquide est réalisée par chauffage à des températures significativement plus faibles, typiquement en dessous de 100°C. Dans les unités traditionnelles de capture de dioxyde de carbone sur fumées, le solvant liquide est vaporisé dans une unité de rebouillage située en pied de l'unité de régénération et remonte au sein de la colonne de stripage. L'invention permet ici de pouvoir relarguer le dioxyde de carbone et de régénérer (partiellement) le solvant liquide sans cette étape énergivore de vaporisation, tout en l'amenant à un niveau de régénération suffisant pour permettre l'absorption partielle nécessaire dans l'absorbeur 200. Les besoins énergétiques et les températures de fonctionnement de l'unité de captage de dioxyde de carbone 34 sont ainsi significativement réduits. De plus, l'emploi d'une colonne de stripage ou encore de rebouilleurs et condenseurs classiquement utilisés dans les unités de captage n'est plus nécessaire : un ballon flash simple suffit à atteindre un niveau de régénération suffisant.

Le besoin énergétique de l'unité de captage 34 est tellement réduit que l'énergie thermique nécessaire au fonctionnement de l'unité de captage peut être récupérée par intégration thermique. Comme expliqué précédemment, la chaleur nécessaire à la régénération du solvant liquide peut être apportée par intégration thermique au moyen d'un circuit fermé 34 permettant de récupérer la chaleur émise à différents endroits de l'installation 10. En particulier, la régénération partielle du solvant liquide peut être effectuée par récupération de chaleur au niveau des systèmes d'échangeurs thermiques impliqués dans le post-traitement des effluents de l'unité de pile à combustible 34, notamment au niveau des quatrième 82, cinquième 89 et sixième 90 systèmes d'échanges thermiques.

Aucun système thermique extérieur n'est alors nécessaire au bon fonctionnement de l'unité de captage de dioxyde de carbone.

De plus, la chaleur émise au cours du fonctionnement de l'unité de pile à combustible 30 peut être utilisée afin de préchauffer les flux 56, 72 alimentant l'unité de pile à combustible 30. On récupère donc une partie de la thermie dispersée par l'unité de pile à combustible 30 ce qui augmente le rendement global du système.

Le procédé et l'installation selon l'invention sont également avantageux en ce que la chaleur récupérée en sortie d'unité de pile à combustible 30 permet de régénérer à bas niveau thermique le solvant liquide au niveau du ballon de détente 216. Cette détente s'effectue à une pression relativement proche de la pression atmosphérique, typiquement de 1 atmosphère à 2 atmosphères. Dans les cas où l'intégralité des thermies disponibles en sortie du système d'anodes 64 n'était pas valorisé, il est possible de récupérer ces thermies de manière à augmenter la température du fluide caloporteur 136 et permettre ainsi d'effectuer la régénération du solvant liquide à une pression plus élevée. L'augmentation de la pression de fonctionnement du ballon de détente 216 permet alors de diminuer considérablement le nombre d'étages de compression nécessaires au transport et/ou à la liquéfaction du dioxyde de carbone CO₂. Le procédé et l'installation selon l'invention permettent donc un gain en équipement mais également en consommation énergétique de la chaine globale (production d'électricité, capture, export).

Dans les installations traditionnelles de post-combustion des effluents de pile à combustible, les fumées traitées avec les solutions aqueuses aminées et récupérées en sortie de l'unité de captage de dioxyde de carbone sont destinées à être rejetées dans l'atmosphère. Ces fumées peuvent toutefois contenir des constituants toxiques et polluants provenant, par exemple, de la dégradation des solvants. Une bonne pratique permettant d'éviter la pollution atmosphérique est de laver à l'eau les fumées avant rejet à l'atmosphère (l'eau devant ensuite être dépolluée). Des équipements supplémentaires sont alors nécessaires, associés à des frais énergétiques de mise en fonctionnement de ces équipements. Dans le cadre de l'invention, le flux anodique appauvri en dioxyde de carbone 19 est recyclé vers l'unité de pile à combustible 30 dans laquelle ces polluants sont captés (unité de désulfurisation 57), soit brûlés directement dans l'unité de pile à combustible 30. Il n'y a donc en aucun cas de rejet de ces polluants à l'atmosphère. L'installation et le procédé selon l'invention permettent en particulier de s'affranchir du besoin des équipements supplémentaires de dépollution.

Le procédé et l'installation selon l'invention sont également avantageux en ce qu'ils permettent de récupérer au moins 90% du dioxyde de carbone formé.

Enfin, l'installation et le procédé selon l'invention sont également avantageux en ce qu'ils permettent un recyclage efficace du combustible n'ayant pas été consommé dans l'unité de pile à combustible.

## Revendications

1. Procédé de mise en œuvre d'un système de pile à combustible, comprenant les étapes suivantes :
- la mise en fonctionnement d'une unité de pile à combustible (30) comprenant au moins un système d'anodes (64) et au moins un système de cathodes (66), ladite unité de pile à combustible (30) étant alimentée en continu avec un flux combustible d'alimentation (35) injecté au niveau du système d'anodes (64) et avec un flux gazeux riche en dioxygène (16) injecté au niveau du système de cathodes (66);
- la récupération en sortie (74, 76) de l'unité de pile à combustible (30) d'un flux gazeux anodique (36) riche en dioxyde de carbone et d'un flux gazeux cathodique (38) comprenant de l'eau ;
- le refroidissement du flux gazeux anodique (36) et la condensation de l'eau présente dans flux gazeux anodique (36) dans une unité de post-traitement, de refroidissement et de condensation (32) pour former un flux anodique sec (40) ;
- l'introduction du flux anodique sec (40) dans une unité de captage de dioxyde de carbone (34) pour former un courant gazeux de dioxyde de carbone (18) et un flux anodique appauvri en dioxyde de carbone (19), ledit flux anodique appauvri en dioxyde de carbone (19) présentant une teneur en dioxyde de carbone de 20% à 70% en volume ;
- l'injection d'au moins une partie (124) du flux anodique appauvri en dioxyde de carbone (19) dans le flux combustible d'alimentation (35) de manière à recycler ladite au moins une partie (124) dans l'unité de pile à combustible (30).

2. Procédé selon la revendication 1, dans lequel le flux anodique appauvri en dioxyde de carbone (19) présente une teneur en dioxyde de carbone de 40% à 60% en volume.

3. Procédé selon la revendication 1 ou selon la revendication 2, dans lequel, au niveau de l'unité de captage du dioxyde de carbone (34), le flux anodique sec (40) est mis en contact avec un solvant liquide apte à absorber du dioxyde de carbone pour former le flux anodique appauvri en dioxyde de carbone (19) et un flux de pied liquide (202) comprenant le solvant liquide chargé en dioxyde de carbone.

4. Procédé selon la revendication 3, dans lequel le dioxyde de carbone absorbé dans le flux de pied liquide (202) est ensuite partiellement relargué par chauffage du flux de pied liquide (202) pour former le courant de dioxyde de carbone (18) et un courant de solvant liquide partiellement régénérée (218).

5. Procédé selon la revendication 4, dans lequel le flux de pied liquide (202) est chauffé par échange thermique avec le flux gazeux anodique (36) et/ou le flux gazeux cathodique (38), de préférence est uniquement chauffée par échange thermique avec le flux gazeux anodique (36) et/ou le flux gazeux cathodique (38).

6. Procédé selon l'une quelconque des revendications 1 à 5, dans lequel au moins 80% du dioxyde de carbone produit au cours du fonctionnement du procédé est récupéré dans le courant gazeux de dioxyde de carbone (18), de préférence au moins 90% en moles, plus préférentiellement de 90% à 99% en moles.

7. Procédé selon l'une quelconque des revendications 1 à 6, dans lequel le flux combustible d'alimentation (35) est un flux d'hydrocarbures en C1-C5, de préférence est un flux de méthane.

8. Procédé selon l'une quelconque des revendications 1 à 7, dans lequel une partie (122) du flux anodique appauvri en dioxyde de carbone (19) est prélevée en sortie de l'unité de captage de dioxyde de carbone (34) puis brûlée dans un four (120), de préférence moins de 30% en masse du flux anodique appauvri en dioxyde de carbone (19) est introduit dans le four (120), plus préférentiellement de 5 à 20% en masse.

9. Procédé selon l'une quelconque des revendications 4 à 8, dans lequel le flux de pied liquide (202) est au moins partiellement chauffé par échange thermique avec un fluide caloporteur (136) circulant dans un circuit fermé (134) d'échange thermique, ledit fluide caloporteur (136) étant chauffé par échange thermique avec le flux gazeux anodique (36) et/ou le flux gazeux cathodique (38).

10. Procédé selon l'une quelconque des revendications 1 à 9, dans lequel, avant d'être injecté dans l'unité de pile à combustible (30), le un flux combustible d'alimentation (35) est chauffé par échange thermique avec le flux gazeux anodique (36).

11. Installation (10) de pile à combustible comprenant :
- une unité de pile à combustible (30) comportant une entrée (68) d'introduction d'un flux combustible d'alimentation (35), une entrée (70) d'introduction d'un flux gazeux riche en dioxygène (16), une sortie (74) de récupération d'un flux gazeux anodique (36), et une sortie (76) de récupération d'un flux gazeux cathodique (38),
- une unité de post-traitement, de refroidissement et de condensation (32) destinée à refroidir et sécher le flux gazeux anodique (36) pour former un flux anodique sec (40),
- une unité de captage de dioxyde de carbone (34) destinée à former un courant gazeux de dioxyde de carbone (18) et un flux anodique appauvri en dioxyde de carbone (19) comprenant une entrée (114) d'introduction du flux anodique sec (40) et une sortie (118) de récupération du flux anodique appauvri en dioxyde de carbone (19),
**caractérisée en ce que** la sortie (118) de récupération du flux anodique appauvri en dioxyde de carbone (19) est reliée à l'entrée (68) d'introduction du flux combustible d'alimentation (35) dans l'unité de pile combustible (30).

12. Installation (10) selon la revendication 11, dans laquelle l'unité de captage du dioxyde de carbone (34) comprend :
- un absorbeur (200) destiné à mettre en contact le flux anodique sec (40) avec un solvant liquide apte à absorber du dioxyde de carbone pour former en tête de l'absorbeur (200) le flux anodique appauvri en dioxyde de carbone (19) et en pied de l'absorbeur (200) un flux de pied liquide (202) comprenant le solvant liquide chargé en dioxyde de carbone,
- au moins un système d'échangeur thermique (204, 208) destiné à chauffer le flux de pied liquide (202) pour former un flux de pied chauffé (210),
- un ballon (216) relié audit au moins un système d'échangeur thermique (204, 208) destiné à former en tête du ballon (216) le courant de dioxyde de carbone (18) et, en pied du ballon (216) un courant de solvant liquide partiellement régénérée (218) destiné à être injectée dans l'absorbeur (200).

13. Installation (10) selon la revendication 12, comprenant en outre un circuit fermé (134) d'échange thermique comprenant un fluide caloporteur (136) destiné à être placé en échange thermique d'une part avec flux de pied liquide (202) comprenant le solvant liquide chargé en dioxyde de carbone, au niveau dudit au moins un système d'échangeur thermique (208), et d'autre part avec le flux gazeux anodique (36) et/ou le flux gazeux cathodique (38).

14. Installation (10) selon l'une quelconque des revendications 11 à 13, **caractérisée en ce que** l'unité de captage de dioxyde de carbone (34) est dépourvue de colonne de stripage.
